# EUROPEAN PATENT APPLICATION

(11) **EP 1 840 162 A1**
(43) Date of publication of application: **03.10.2007**
(21) Application number: 05814491.6
(22) Date of filing: 06.12.2005
(51) Int. Cl.: C08L 9/00, C08K 5/00, A63B 37/00

(54) **RUBBER COMPOSITION AND GOLF BALL EMPLOYING THE SAME**

(30) Priority: 22.12.2004 JP 2004370739; 22.12.2004 JP 2004370740
(71) Applicant: Ube Industries, Ltd., Ube-shi, Yamaguchi-ken 755-8633 (JP)
(72) Inventor: ISHIGUCHI, Kouji, Chiba Petrochemical Factory, Ichihara-shi, Chiba 290-8550 (JP); OKAMOTO, Naomi, Chiba Petrochemical Factory, Ichihara-shi, Chiba 290-8550 (JP)
(74) Representative: Bublak, Wolfgang
(86) International application number: PCT/JP2005/022374
(87) International publication number: WO 2006/067961

(57) **Abstract**

A rubber composition for golf balls, comprises a base polymer consisted of (A) 20-99 weight parts of high cis polybutadiene synthesized in the presence of a cobalt-based catalyst and having a Mooney viscosity of 50-70 and a molecular weight distribution (Weight average molecular weight (Mw)/ Number average molecular weight (Mn)) of 2.5-3.8, and (B) 80-1 weight part(s) of high cis polybutadiene synthesized in the presence of a non-cobalt-based catalyst and having a Mooney viscosity of 30-70; and a crosslinking coagent.

## Description

### BACKGROUND OF THE INVENTION

### Field of the Invention

The present invention relates to a rubber composition for use in golf balls; tires including tire outer parts such as treads and sidewalls, and tire inner parts such as carcasses, belts, and beads; industrial products such as rubber vibration isolators, belts, hoses, and rubber vibration suspensions; and shoes such as men's shoes, women's shoes, and sports shoes. More particularly, it relates to a golf ball rubber composition for use in golf balls, and a golf ball.

### Description of the Related Art

Polybutadiene has a bonded portion (1,4-structure) generated in polymerization at 1,4-sites and a bonded portion (1,2-structure) generated in polymerization at 1,2-sites, which coexist in a molecular chain as the so-called microstructure. The 1,4-strucure is further classified into two: a cis structure and a trans structure. On the other hand, the 1,2-structure is structured to have a vinyl group in a side chain.

As known, depending on polymerization catalysts and polymerization conditions, polybutadienes different in the above microstructure are produced and employed in various uses in accordance with their properties.

In particular, polybutadiene with a relatively narrow molecular weight distribution and a high linearity of molecules has a property excellent in abrasion resistance, resistance to heat radiation, and rebound. Tcp/ML₁₊₄ is employed as the index of linearity of polybutadiene with almost the same molecular weight distribution. Tcp indicates the degree of entanglement among molecules in a thick solution. The lager the Tcp/ML₁₊₄, the smaller the branch degree becomes and the larger the linearity becomes.

Golf balls are classified into a thread wound type and a solid type. The solid center in the thread wound golf ball, as well as the solid golf ball, includes a rubber base material such as polybutadiene, which conventionally employs a monomer having an unsaturated bond, such as an unsaturated metal carboxylate, mixed therein as a crosslinking coagent. A peroxide and a metal oxide are also mixed therein.

The polybutadiene used as the rubber base material of golf balls is generally required to have high rebound and excellent processability. A higher Mooney viscosity improves the rebound but worsens the processability while a wider molecular weight distribution improves the processability but lowers the rebound. Thus, there is an antinomy relation between both.

For the purpose of achieving the compatibility of processability and rebound, improvements in the property of polybutadiene have been tried and various proposes have been provided. For example, JP-A 63-275356 and JP-A 2-177973 disclose polybutadienes having a high Mooney viscosity and a wide molecular weight distribution and synthesized in the presence of a Ni-based catalyst. JP-A 6-80123 discloses a method using polybutadiene with a low Mooney viscosity blended with polybutadiene with a high Mooney viscosity. There are still needs for those having much higher rebound and more excellent processability.

JP-A 7-268132 discloses the use of polybutadiene, having the cis content of 97 % or more and modified with a tin compound, as a rubber base material for golf balls. This remains unchanged in the crosslinking density compared to the conventional high cis polybutadiene and accordingly an improvement is desired in durability

The Inventor et al. disclose in JP-A 2001-40040 that polybutadiene appropriately containing the 1,2-content is used in long carry golf balls.

The rubber compositions composed of the conventional polybutadiene for golf balls do not include those excellent in dimension stability of extrusions while maintaining hardness and high rebound, and those excellent in roll processability while maintaining hardness and high rebound. The present invention has a first object to provide a rubber composition excellent in dimension stability of extrusions and suitable for golf balls and the like with high hardness and large rebound. The present invention has a second object to provide a rubber composition excellent in roll processability while maintaining hardness and high rebound and suitable for golf balls and the like.

### SUMMARY OF THE INVENTION

To achieve the first object, the present invention provides a rubber composition, comprising: a base polymer consisted of (A) 20-99 weight parts of high cis polybutadiene synthesized in the presence of a cobalt-based catalyst and having a Mooney viscosity of 50-70 and a molecular weight distribution (Weight average molecular weight (Mw)/ Number average molecular weight (Mn)) of 2.5-3.8, and (B) 80-1 weight part(s) of high cis polybutadiene synthesized in the presence of a non-cobalt-based catalyst and having a Mooney viscosity of 30-70; and a crosslinking coagent.

To achieve the second object, the present invention provides a rubber composition, comprising: a base polymer consisted of (A) 20-99 weight parts of high cis polybutadiene synthesized in the presence of a cobalt-based catalyst and having a Mooney viscosity of 30-42 and a molecular weight distribution (Weight average molecular weight (Mw)/ Number average molecular weight (Mn)) of 2.5-3.8, and (B) 80-1 weight part(s) of high cis polybutadiene synthesized in the presence of a non-cobalt-based catalyst and having a Mooney viscosity of 30-70; and a crosslinking coagent.

The present invention also relates to the rubber composition, in which the (A) high cis polybutadiene has a ratio (Tcp/ML) of 2.0-5.0 between the 5% toluene solution viscosity (Tcp) and the Mooney viscosity (ML), and a cis-1.4 content of 95 % or above.

The present invention also relates to the composition, in which the (A) high cis polybutadiene has a weight average molecular weight (Mw) of 550-700 thousands and a Number average molecular weight (Mn) of 150-300 thousands.

The present invention also relates to the rubber composition for golf balls, in which the (B) high cis polybutadiene is synthesized in the presence of a nickel- or neodymium-based catalyst and has a cis-1.4 content of 95 % or above.

The rubber composition of the present invention is composed of specific high cis polybutadienes and a crosslinking coagent and is excellent in dimension stability of extrusions and suitable for golf balls and the like with high hardness and high rebound. The rubber composition of the present invention is composed of specific high cis polybutadienes and a crosslinking coagent and is excellent in processability while maintaining appropriate hardness and high rebound and suitable for golf balls and the like.

### DETAILED DESCRIPTION OF THE INVENTION

The present invention relates to a rubber composition, comprising: a base polymer containing (A) high cis polybutadiene synthesized in the presence of a cobalt-based catalyst and having a Mooney viscosity of 30-42 or 50-70 and a molecular weight distribution (Weight average molecular weight (Mw)/ Number average molecular weight (Mn)) of 2.5-3.8, and a crosslinking coagent mixed by 10-50 weight parts on the basis of 100 weight parts of the base polymer.

Preferably, in the high cis polybutadiene the ratio (Tcp/ML) of the 5% toluene solution viscosity (Tcp) to the Mooney viscosity (ML) falls within 2.0-5.0.

Preferably, the high cis polybutadiene has a weight average molecular weight (Mw) of 400-540 thousands and a Number average molecular weight (Mn) of 100-250 thousands.

Preferably, the high cis polybutadiene has a cis-1.4 content of 95 % or above.

The (A) polybutadiene of the present invention synthesized in the presence of a cobalt-based catalyst has the following properties. The Mooney viscosity falls within 50-70, preferably 55-65. If the Mooney viscosity is lower than 50, the rebound lowers. If it is higher than 70, the roll processability worsens undesirably. The Mooney viscosity also falls within 30-42, preferably 35-40. If the Mooney viscosity is larger than the above range, the roll processability worsens. If it is smaller than the above range, the rebound may lower undesirably.

The molecular weight distribution (Weight average molecular weight (Mw)/ Number average molecular weight (Mn)) falls within 2.5-3.8, preferably 2.6-3.5, more preferably 2.6-3.2. If the molecular weight distribution is larger than the above range, the rebound lowers. If it is smaller than the above range, the roll processability may worsen undesirably.

The ratio (Tcp/ML) of the 5% toluene solution viscosity (Tcp) to the Mooney viscosity (ML) falls within 2.0-5.0, preferably 2.0-4.0, more preferably 2.1-3.5. If the Tcp/ML ratio is larger than the above range, the cold flow property of raw rubber increases. If it is smaller than the above range, the rebound lowers undesirably.

The cis-1.4 content is preferably 95 % or above, more preferably 97 % or above. If the cis-1.4 content is lower than the above, the rebound lowers undesirably.

The polybutadiene can be produced in the presence of a cobalt-based catalyst. An example of the cobalt-based catalyst composition includes a catalytic system composed of a cobalt compound, a halogen-containing organoaluminum compound, and water.

The cobalt compound preferably employs a salt of or a complex of cobalt. Particularly preferable examples include cobalt salts such as cobalt chloride, cobalt bromide, cobalt nitrate, cobalt octylate (ethylhexanoate), cobalt naphthenate, cobalt acetate, and cobalt malonate; cobalt bisacetylacetonate, and cobalt trisacetylacetonate; acetoacetic acid ethyl ester cobalt; an organic basic complex of a pyridine complex or picoline complex of a cobalt salt; and an ethyl alcohol complex.

Examples of the halogen-containing organoaluminum include trialkyl aluminum or dialkyl aluminum chloride, dialkyl aluminum bromide, alkyl aluminum sesquichloride, alkyl aluminum sesquibromide, and alkyl aluminum dichloride.

Examples of specific compounds include trialkyl aluminum such as trimethyl aluminum, triethyl aluminum, triisobutyl aluminum, trihexyl aluminum, trioctyl aluminum, and tridecyl aluminum.

Further included are dialkyl aluminum chlorides such as dimethyl aluminum chloride, and diethyl aluminum chloride; organoaluminum halides such as sesquiethyl aluminum chloride, and ethyl aluminum dichloride; hydrogenated organoaluminum halides such as diethyl aluminum hydride, diisobutyl aluminum hydride, and sesquiethyl aluminum hydride. The organoaluminum compounds may be used in combination of two or more.

Other than the butadiene monomer, the following may be contained by a small amount: conjugate dienes such as isoprene, 1,3-pentadiene, 2-ethyl-1,3-butadiene, 2,3-dimethylbutadiene, 2-methylpentadiene, 4-methylpentadiene, and 2,4-hexadiene; non-cyclic monoolefins such as ethylene, propylene, butene-1, butene-2, isobutene, pentene-1, 4-methylpentene-1, hexene-1, and octene-1; cyclic monoolefins such as cyclopentene, cyclohexene, and norbornene; and/or aromatic vinyl compounds such as styrene, and α-methylstyrene; and non-conjugate dienes such as dicyclopentadiene, 5-ethylidene-2-norbomene, and 1,5-hexadiene.

Polymerization methods are not limited particularly. For example, bulk polymerization using a conjugate diene compound monomer itself, such as 1,3-butadiene, as a polymerization solvent, and solution polymerization may be applicable. Examples of the solvent in the solution polymerization include aromatic hydrocarbons such as toluene, benzene, and xylene; aliphatic hydrocarbons such as n-hexane, butane, heptane, and pentane; alicyclic hydrocarbons such as cyclopentane, and cyclohexane; olefin-based hydrocarbons such as the above olefin compounds, cis-2-butene, and trans-2-butene; hydrocarbon-based solvents such as mineral spirit, solvent naphtha, and kerosene; and halogenated hydrocarbon-based solvents such as methylene chloride.

Among those, toluene, cyclohexane, or a mixture of cis-2-butene with trans-2-butene is employed suitably.

Preferable polymerization temperatures fall within a range between -30 °C and 150°C, more particularly within a range between 30°C and 100°C. Preferable polymerization periods of time fall within a range between one minute and 12 hours, more particularly within a range between five minutes and five hours.

After polymerization for a certain period of time, the inside of the polymerization vessel is subjected to post treatments such as steps of depressurizing, cleaning, and drying, if required.

The (B) polybutadiene of the present invention synthesized in the presence of a non-cobalt-based catalyst has the following properties. The Mooney viscosity falls within 30-70, preferably 30-65, and more preferably 30-60. If the Mooney viscosity is larger than the above range, the roll processability worsens. If it is smaller than the above range, the rebound may lower undesirably.

The cis-1.4 content is preferably 95 % or above, more preferably 97 % or above. If the cis-1.4 content is lower than the above, the rebound lowers undesirably. The above polybutadiene can be produced in the presence of a non-cobalt-based catalyst. Examples of the non-cobalt-based catalyst include a nickel-based catalyst and a neodymium-based catalyst.

Examples of the nickel-based catalyst include a catalytic system composed of a nickel compound and an organoaluminum compound.

Examples of the nickel compound include organic acid salts such as nickel naphthenate, nickel formate, nickel octylate, nickel stearate, nickel citrate, nickel benzoate, and nickel tolulate; organic complex compounds such as nickel acetylacetonato; nickel alkylbenzensulphonate; and nickel oxyborate. Among those, nickel octylate is preferable.

Examples of the organoaluminum compound include a halogen-containing aluminum compound; a trialkyl aluminum compound; and an aluminoxane compound obtained by the reaction of the above compound with water.

Examples of the halogen-containing aluminum compound include dialkyl aluminum halides such as dialkyl aluminum chloride, and dialkyl aluminum bromide; alkyl aluminum sesqui halides such as alkyl aluminum sesquichloride, and alkyl aluminum sesquibromide; and alkyl aluminum dihalides such as alkyl aluminum dichloride, and alkyl aluminum dibromide.

Examples of specific compounds include diethyl aluminum monochloride, diethyl aluminum monobromide, dibutyl aluminum monochloride, ethyl aluminum sesquichloride, ethyl aluminum dichloride, dicyclohexyl aluminum monochloride, and diphenyl aluminum monochloride.

Examples of the trialkyl aluminum compound include triethyl aluminum, trimethyl aluminum, triisobutyl aluminum, trihexyl aluminum, and trioctyl aluminum.

Examples of the aluminoxane compound include aminoxane obtained by the reaction of the above halogen-containing aluminum compound or trialkyl aluminum with water.

These organoaluminum compounds may be employed solely or in combination of several.

Examples of the neodymium-based catalyst include a catalytic system composed of a neodymium compound, an organoaluminum compound, and water.

Examples of the neodymium compound include chlorides; bromides; nitrates; fatty acid salts such as a salt of Versatic acid (trade named by Shell Chemical to a carboxylic acid having a carboxylic group mainly bonded with a tertiary carbon atom), octylate, 2-ethyl hexanoate, naphthanate, acetate, trifluoro acetate, and malonate; organic basic complexes such monoacetyl acetonate, bis-acetyl acetonate, trisacetyl acetonate, acetoacetic acid ethyl ester complex, triarylphosphine complex of halide, trialkyl phosphine complex, pyridine complex, and picoline complex; ether complexes such as diethylether complex, tetrahydrofuran complex, and dioxane complex; and ethylalcohol complexes.

Among those, fatty acid salts such as versatate, octylate, naphthanate, and trifluoro acetate are preferable.

Examples of the organoaluminum compound include a halogen-containing aluminum compound; an alkyl aluminum hydride; a trialkyl aluminum; and a reaction product from the reaction of the above compound with water.

Examples of the halogen-containing aluminum compound include dialkyl aluminum halides such as dialkyl aluminum chloride, and dialkyl aluminum bromide; alkyl aluminum sesqui halides such as alkyl aluminum sesquichloride, and alkyl aluminum sesquibromide; and alkyl aluminum dihalides such as alkyl aluminum dichloride, and alkyl aluminum dibromide.

Examples of specific compounds include diethyl aluminum monochloride, diethyl aluminum monobromide, dibutyl aluminum monochloride, ethyl aluminum sesquichloride, ethyl aluminum dichloride, dicyclohexyl aluminum monochloride, and diphenyl aluminum monochloride.

Examples of the alkyl aluminum hydride include dialkyl aluminum hydride, alkyl aluminum sesquihydride, and alkyl aluminum dihydride.

Examples of specific compounds include diethyl aluminum hydride, diisobutyl aluminum hydride, ethyl aluminum sesquihydride, ethyl aluminum dihydride, dicyclohexyl aluminum hydride, and diphenyl aluminum hydride.

Examples of the trialkyl aluminum compound include triethyl aluminum, trimethyl aluminum, triisobutyl aluminum, trihexyl aluminum, and trioctyl aluminum.

Examples of the reaction product of the organoaluminum compound with water include alumoxanes obtained by the reaction of trimethyl aluminum, triethyl aluminum, diethyl aluminum monochloride, diethyl aluminum monobromide, ethyl aluminum sesquichloride, and ethyl aluminum dichloride, respectively with water.

These organoaluminum compounds may be employed solely or in combination of two or more.

The above catalytic system may jointly employ an ionic compound composed of a non-coordinate anion and a cation. Examples of the non-coordinate anion may include tetra(phenyl) borate, tetra(fluorophenyl) borate, tetrakis(difluorophenyl) borate, tetrakis(trifluorophenyl) borate, tetrakis(tetra fluorophenyl) borate, tetrakis(pentafluorophenyl) borate, and tetrakis(3,5-bistrifluoromethylphenyl) borate.

On the other hand, examples of the cation include a carbonium cation, an oxonium cation, an ammonium cation, and a phosphonium cation.

Specific examples of the carbonium cation include trisubstituted carbonium cations such as a triphenyl carbonium cation, and a tris(substituted phenyl) carbonium cation. Specific examples of the tris(substituted phenyl) carbonium cation include a tris(toluyl) carbonium cation, and a tris(dimethylphenyl) carbonium cation.

Specific examples of the ammonium cation include trialkyl ammonium cations such as a trimethyl ammonium cation, a triethyl ammonium cation, a tripropyl ammonium cation, and a tributyl ammonium cation.

Specific examples of the phosphonium cation include triaryl phosphonium cations such as a triphenyl phosphonium cation, a tri(methylphenyl) phosphonium cation, and a tri(dimethylphenyl) phosphonium cation.

The ionic compounds may be arbitrarily selected from the non-coordinate anions and the cations exemplified above and mixed for preferable use.

Among those, preferable examples of the ionic compound include triphenyl carbonium tetrakis(pentafluorophenyl) borate, triphenyl carbonium tetrakis(fluorophenyl) borate, N,N-dimethyl anilinium tetrakis(pentafluorophenyl) borate, and 1,1'-dimethyl ferrocenium tetrakis(pentafluorophenyl) borate. Among those, particularly preferable is triphenyl carbonium tetrakis(pentafluorophenyl) borate.

The ionic compounds may be employed solely or in combination of two or more.

The base polymer of the present invention can be obtained by mixing 20-99 weight parts of the above (A) high cis polybutadiene with 80-1 weight part(s) of (B) high cis polybutadiene, preferably 30-95 weight parts of (A) with 70-5 weight parts of (B) high cis polybutadiene.

The rubber composition of the present invention includes a crosslinking coagent mixed by 10-50 weight parts on the basis of 100 weight parts of the base polymer that contains the polybutadienes having the above properties.

The crosslinking coagent mixed in the rubber composition is preferably one of monovalent or divalent metallic salts of α,β-ethylenic unsaturated carboxylic acid. Specific examples thereof include zinc diacrylate, basic zinc methacrylate, and zinc dimethacrylate. These metallic salts of α,β-ethylenic unsaturated carboxylic acid may be directly mixed with a rubber base material in general methods. In another method, a metal oxide such as zinc oxide is previously kneaded in the rubber base material. In addition, an α,β-ethylenic unsaturated carboxylic acid such as acrylic acid and methacrylic acid is added and kneaded in the rubber base material to achieve the reaction of the α,β-ethylenic unsaturated carboxylic acid with the metal oxide in the rubber base material. As a result, a metallic salt of α,β-ethylenic unsaturated carboxylic acid is obtained.

The mixed amount of the crosslinking coagent preferably falls within 10-50 weight parts on the basis of 100 weight parts of the rubber base material. If the mixed amount of the crosslinking coagent is smaller than the above range, crosslinking can not proceed sufficiently, resulting in lowered rebound performance, shortened carries, and worsened durability. If the mixed amount of the crosslinking coagent is larger than the above range, the compression becomes too large and accordingly the feeling of impact worsens.

It is preferable in the present invention that, in addition to the crosslinking coagent, peroxides are mixed as essential components in the rubber composition that will configure a rubbery portion.

The peroxides act as initiators for crosslinking, grafting and polymerizing the rubber and the crosslinking coagent. Suitable specific examples of the peroxides include dicumyl peroxide, 1,1-bis(t-butylperoxy)3,3,5-trimethylcyclohexane.

The mixed amount of the peroxides falls within 0.2-5 weight parts on the basis of 100 weight parts of the rubber base material. If the mixed amount of the peroxides is smaller than the above range, crosslinking and so forth can not proceed sufficiently, resulting in lowered rebound performance, shortened carries, and worsened durability. If the mixed amount of the peroxides is larger than the above range, over-cure (over crosslinking) occurs, resulting in increased fragileness and worsened durability.

The rubber composition may be mixed with zinc oxide also acting as a crosslinking auxiliary when the crosslinking coagent is zinc diacrylate or zinc dimethacrylate. Further, a filling agent such as barium sulfate, an anti-oxidant, and an additive such as zinc stearate may be mixed, if required.

### EXAMPLES

### Experimental example 1

Examples based on the present invention will be described below specifically. A microstructure was identified in the infrared absorption spectrum analysis. The microstructure was calculated from the absorbed intensity ratio at cis 740 cm⁻¹, trans 967 cm⁻¹, and vinyl 910 cm⁻¹.

A molecular weight (Mw, Mn) was measured in a GPC method: HLC-8220 (available from Toso Inc.) and calculated by standard polystyrene conversion.

A toluene solution viscosity (Tcp) was measured on 2.28 g of the polymer dissolved in 50 ml of toluene at 25 °C using a Canon-Fenske viscometer No. 400 with a viscometer calibration standard solution (JIS Z8809) as the standard solution.

A raw rubber Mooney viscosity (ML₁₊₄, 100 °C) was measured based on JIS 6300.

An extrusion was formed by a MPT (processability tester available from Monsanto Inc.) under the condition with a die (D = 1.5 mm, L/D = 1) at a temperature of 80 °C, and 50/sec. A die swell was calculated from a section of the extrusion and estimated by an index relative to 100 of Comparative example 1. The smaller the index, the better the dimension stability becomes.

A hardness was measured in accordance with a measuring method stipulated in JIS-K6253 using a durometer (type D) and estimated by an index relative to 100 of Comparative example 1. The larger the index, the higher the hardness becomes.

A 20% tensile stress/tensile strength was measured in accordance with a measuring method stipulated in JIS-K6251 using a No. 3 dumbbell at a tensile rate of 500 mm/min and estimated by an index relative to 100 of Comparative example 1. The larger the index, the higher and better the 20% tensile stress/tensile strength becomes.

A rebound was measured in accordance with a measuring method stipulated in JIS-K6251 in a tripso test and estimated by an index relative to 100 of Comparative example 1. The larger the index, the higher and better the rebound becomes.

### (Examples 1-6, Comparative examples 1-5)

Polybutadienes shown in Table 1 were employed to produce rubber compositions for golf balls. The conditions and results are shown in Table 2.

**Table 1**

| Trade name | Trial model 1 | Trial model 2 | Trial model 3 | BR 150 | BR 01 | BR 51 | BR 730 | CB 24 |
|---|---|---|---|---|---|---|---|---|
| Manufacture | Ube | Ube | Ube | Ube | JSR | JSR | JSR | Bayer |
| Catalytic system | Co | Co | Co | Co | Ni | Nd | Nd | Nd |
| Mooney viscosity | 60 | 65 | 72 | 43 | 44 | 34 | 56 | 45 |
| Cis 1,4 content (%) | 98 | 98 | 98 | 97 | 96 | 97 | 98 | 97 |
| Mw (10⁴) | 63 | 69 | 71 | 54 | 63 | 52 | 73 | 60 |
| Mn (10⁴) | 22 | 23 | 24 | 20 | 15 | 16 | 22 | 22 |
| Mw/Mn | 2.9 | 3.0 | 3.0 | 2.7 | 4.2 | 3.2 | 3.3 | 2.7 |
| 5% Toluene solution viscosity | 200 | 205 | 190 | 75 | 150 | 150 | 290 | 140 |
| Tcp/ML | 3.3 | 3.2 | 2.7 | 1.8 | 3.4 | 4.4 | 5.2 | 3.1 |

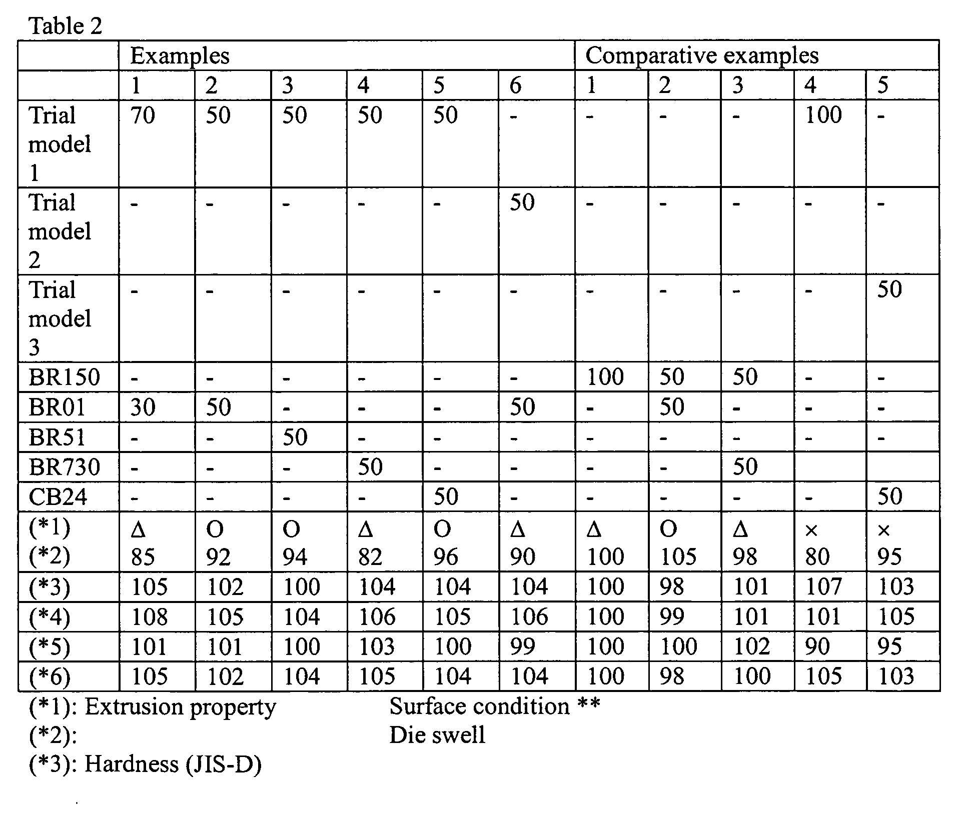

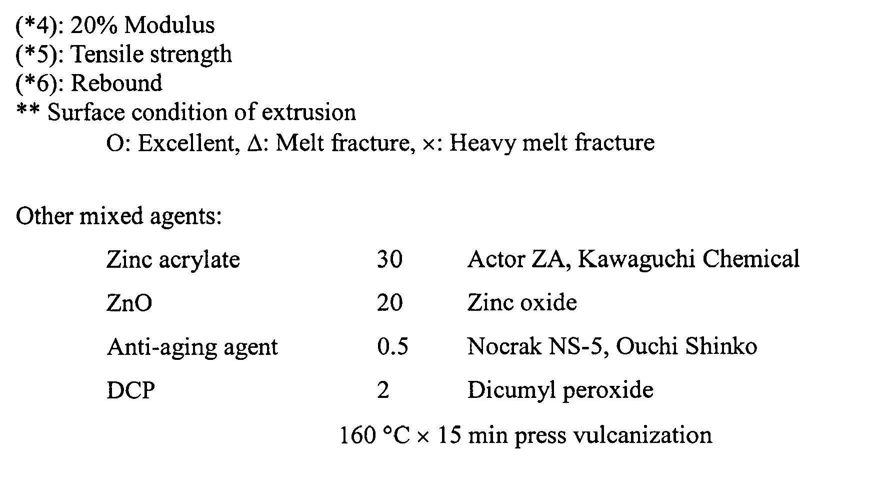

### Experimental example 2

The microstructure, the molecular weight (Mw, Mn), the toluene solution viscosity (Tcp), the hardness, and the rebound were measured like Example 1.

The Mooney viscosity (ML₁₊₄, 100 °C) was measured about the raw rubber and the mixed agent based on JIS 6300. The Mooney viscosity of the mixed agent was estimated by an index relative to 100 of Comparative example 6. The smaller the index, the smaller the viscosity becomes and the better the processability becomes.

The roll processability was determined by winding the mixed agent around a 6-inch roll at 50 °C and visually observing the wound condition.

The tensile strength was measured in accordance with the measuring method stipulated in JIS-K6251 using a No. 3 dumbbell at a tensile rate of 500 mm/min and estimated by an index relative to 100 of Comparative example 6.
The larger the index, the higher and better the tensile strength becomes.

### (Examples 7-11, Comparative examples 6-8)

Polybutadienes shown in Table 3 were employed to produce rubber compositions for golf balls. The conditions and results are shown in Table 4.

**Table 3**

| Trade name | BR 700(A) | BR 150 | BR 01(B) | BR 51(B) | BR 730(B) | CB 24(B) |
|---|---|---|---|---|---|---|
| Manufacture | Ube | Ube | JSR | JSR | JSR | Bayer |
| Catalytic system | Co | Co | Ni | Nd | Nd | Nd |
| Mooney viscosity | 38 | 43 | 44 | 34 | 56 | 45 |
| Cis 1,4 content (%) | 98 | 97 | 96 | 97 | 98 | 97 |
| Mw (10⁴) | 49 | 54 | 63 | 52 | 73 | 60 |
| Mn (10⁴) | 18 | 20 | 15 | 16 | 22 | 22 |
| Mw/Mn | 2.7 | 2.7 | 4.2 | 3.2 | 3.3 | 2.7 |
| 5% Toluene solution viscosity | 87 | 75 | 150 | 150 | 290 | 140 |
| Tcp/ML | 2.3 | 1.8 | 3.4 | 4.4 | 5.2 | 3.1 |

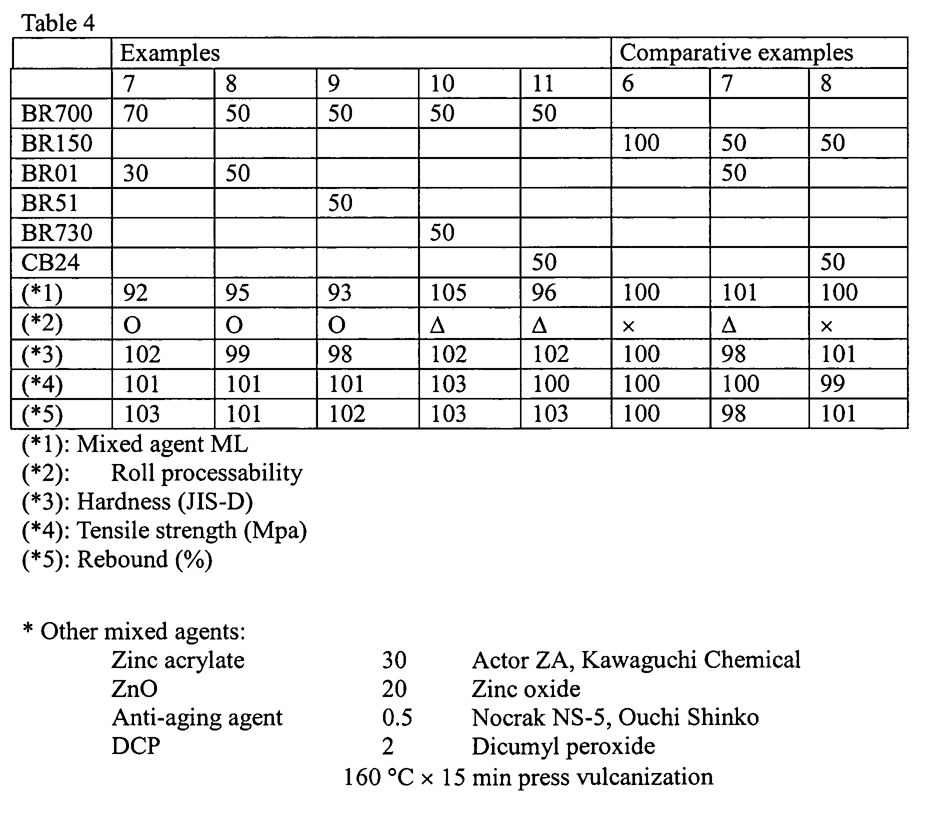

## Claims

1. A rubber composition, comprising:
a base polymer consisted of (A) 20-99 weight parts of high cis polybutadiene synthesized in the presence of a cobalt-based catalyst and having a Mooney viscosity of 50-70 and a molecular weight distribution (Weight average molecular weight (Mw)/ Number average molecular weight (Mn)) of 2.5-3.8, and (B) 80-1 weight part(s) of high cis polybutadiene synthesized in the presence of a non-cobalt-based catalyst and having a Mooney viscosity of 30-70; and
a crosslinking coagent.

2. A rubber composition, comprising:
a base polymer consisted of (A) 20-99 weight parts of high cis polybutadiene synthesized in the presence of a cobalt-based catalyst and having a Mooney viscosity of 30-42 and a molecular weight distribution (Weight average molecular weight (Mw)/ Number average molecular weight (Mn)) of 2.5-3.8, and (B) 80-1 weight part(s) of high cis polybutadiene synthesized in the presence of a non-cobalt-based catalyst and having a Mooney viscosity of 30-70; and
a crosslinking coagent.

3. The rubber composition according to claim 1 or 2, wherein said (A) high cis polybutadiene has a ratio (Tcp/ML) of 2.0-5.0 between the 5% toluene solution viscosity (Tcp) and the Mooney viscosity (ML), and a cis-1.4 content of 95 % or above.

4. The rubber composition according to any one of claims 1-3, wherein said (A) high cis polybutadiene has a weight average molecular weight (Mw) of 550-700 thousands and a Number average molecular weight (Mn) of 150-300 thousands.

5. The rubber composition according to any one of claims 1-4, wherein said (B) high cis polybutadiene is synthesized in the presence of a nickel- or neodymium-based catalyst and has a cis-1.4 content of 95 % or above.

6. A golf ball comprising a rubber base material having said rubber composition according to any one of claims 1-5.

## Amended claims

### Amended claims under Art. 19.1 PCT

**1.** 1.(amended) A rubber composition, comprising:
a base polymer consisted of (A) 20-99 weight parts of high cis polybutadiene synthesized in the presence of a cobalt-based catalyst and having a Mooney viscosity of 50-70 and a molecular weight distribution (Weight average molecular weight (Mw)/ Number average molecular weight (Mn)) of 2.5-3.8, and (B) 80-1 weight part(s) of high cis polybutadiene synthesized in the presence of a nickel-based catalyst or a neodymium-based catalyst and having a Mooney viscosity of 30-70; and
a crosslinking coagent.

**2.** (amended) The rubber composition according to claim 1, wherein said (A) high cis polybutadiene has a ratio (Tcp/ML) of 2.0-5.0 between the 5% toluene solution viscosity (Tcp) and the Mooney viscosity (ML), and a cis-1.4 content of 95 % or above.

**3.** (amended) The rubber composition according to claim 1 or 2, wherein said (A) high cis polybutadiene has a weight average molecular weight (Mw) of 550-700 thousands and a Number average molecular weight (Mn) of 150-300 thousands.

**4.** (amended) The rubber composition according to any one of claims 1-3, wherein said (B) high cis polybutadiene is synthesized in the presence of a nickel- or neodymium-based catalyst and has a cis-1.4 content of 95 % or above.

**5.** (amended) A golf ball comprising a rubber base material having said rubber composition according to any one of claims 1-4.

**6.** (deleted)
